# EUROPÄISCHE PATENTSCHRIFT

(11) **EP 3 989 400 B1**
(45) Veröffentlichungstag und Bekanntmachung des Hinweises auf die Patenterteilung: **27.05.2026**
(21) Anmeldenummer: 21202374.1
(22) Anmeldetag: 13.10.2021
(51) Int. Cl.: H02K 1/20, H02K 9/19, H02K 7/116, H02K 3/24, H02K 5/20, H02K 7/00

(54) **ELEKTRISCHE MASCHINE, GETRIEBEMOTOR MIT EINER ELEKTRISCHEN MASCHINE UND FAHRZEUG MIT EINER ELEKTRISCHEN MASCHINE**
ELECTRIC MACHINE, TRANSMISSION ENGINE WITH AN ELECTRIC MACHINE AND VEHICLE WITH AN ELECTRIC MACHINE
MACHINE ÉLECTRIQUE, MOTO-RÉDUCTEUR DOTÉ D'UNE MACHINE ÉLECTRIQUE ET VÉHICULE DOTÉ D'UNE MACHINE ÉLECTRIQUE

(30) Priorität: 22.10.2020 DE 102020127829
(43) Veröffentlichungstag der Anmeldung: 27.04.2022
(73) Patentinhaber: Valeo eAutomotive Germany GmbH, 91056 Erlangen (DE)
(72) Erfinder: Hofmann, Bianca, 97616 Bad Neustadt a.d.Saale (DE); Dieterich, Sebastian, 97616 Bad Neustadt a.d.Saale (DE)
(74) Vertreter: Valeo Powertrain Systems

(56) Entgegenhaltungen:
- WO-A1-02/49193
- WO-A1-2016/173812
- WO-A2-2012/003208
- DE-A1- 102018 222 355
- US-A1- 2013 193 786
- US-A1- 2017 271 955
- US-A1- 2019 273 420

## Beschreibung

### TECHNISCHES GEBIET

Die Erfindung betrifft eine elektrische Maschine, einen Getriebemotor mit einer elektrischen Maschine und ein Fahrzeug mit einer elektrischen Maschine.

### STAND DER TECHNIK

Bei elektrischen Maschinen ist es bekannt, den Stator zu kühlen, um Abwärme, welche beim Betrieb der elektrischen Maschine anfällt, aus dem Stator abzuführen. Bei einigen System werden dazu Kühlrohre im Stator vorgesehen, die Teil eines Kühlsystems sind und von einem Wärmeträger durchströmt werden. Das Kühlsystem kann weiterhin eine Pumpe zum Umwälzen des Wärmeträgers sowie einen Wärmetauscher umfassen. Nachteilig an den bekannten Verfahren zur Herstellung eines Stators ist, dass diese technisch relativ aufwändig sind und die Herstellung der elektrischen Maschine verteuern.

Aus der WO 2016/173812 A1 ist eine elektrische Maschine mit einem gekühlten Stator bekannt.

### OFFENBARUNG DER ERFINDUNG

Eine Aufgabe der Erfindung ist es daher, eine verbesserte elektrische Maschine, einen verbesserten Getriebemotor sowie ein verbessertes Fahrzeug anzugeben. Insbesondere soll die Kühlung des Stators mit relativ geringerem technischen Aufwand erfolgen können.

Die Aufgabe der Erfindung wird mit einer elektrischen Maschine nach Anspruch 1 gelöst, welche
- ein erstes Lagerschild und ein zweites Lagerschild umfasst,
- einen zwischen den beiden Lagerschilden angeordneten Stator mit einem Statorblechpaket und darin angeordneten Statorwicklungen,
- einen im Stator angeordneten Rotor mit einer in den beiden Lagerschilden drehbar gelagerten Rotorwelle und
- vollständig im Statorblechpaket angeordnete und von diesem umrandete Kühlkanäle.

Mit anderen Worten verlaufen im Statorblechpaket Kühlkanäle, deren (umfangsseitige) Begrenzung vollständig durch die Statorbleche des Statorblechpakets gebildet ist.

Die Aufgabe der Erfindung wird weiterhin mit einem Getriebemotor gelöst, welcher ein Getriebe und eine an das Getriebe gekoppelte elektrische Maschine der zuvor genannten Art umfasst, wobei ein Kühl- und/oder Schmierkreislauf des Getriebes mit den Kühlkanälen der elektrischen Maschine hydraulisch verbunden ist.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine oder durch einen Getriebemotor der oben genannten Art erfolgt.

Mit Hilfe der vorgeschlagenen Maßnahmen können die eingangs genannten Nachteile überwunden werden. Insbesondere wird die Kühlung eines Stators mit geringerem technischen Aufwand ermöglicht. Konkret werden die Kühlkanäle direkt von den Statorblechen des Statorblechpakets umgrenzt, zusätzliche Kühlrohre sind hierfür nicht vorgesehen. Das heißt, ein Kühlmedium kommt direkt mit den Statorblechen in Kontakt. Dadurch, dass die (umfangsseitige) Begrenzung vollständig von den Statorblechen des Statorblechpaket gebildet ist, kann ein Motorgehäuse, das üblicherweise einen Teil der (umfangsseitigen) Begrenzung der Kühlkanäle bildet, eingespart werden. Die elektrische Maschine kann daher besonders einfach und leicht aufgebaut sein.

Die Kühlkanäle können somit beispielsweise direkt durch Stanzen oder Schneiden entsprechender Ausschnitte in den einzelnen Statorblechen hergestellt sein. Werden die Statorbleche übereinander gestapelt, so entstehen in Folge die Kühlkanäle. Werden die Statorbleche beim Stapeln nicht verdreht, so entstehen Kühlkanäle, die in axialer Richtung parallel zu einer Rotationsachse der Rotorwelle verlaufen. Werden die Statorbleche beim Stapeln dagegen etwas gegeneinander verdreht, so entsteht eine Schrägstellung der Kühlkanäle, sodass diese schraubenlinienförmig um die Rotationsachse der Rotorwelle verlaufen. Vorteilhaft sind die Kühlkanäle nur an Stirnseiten des Statorblechpakets offen. Dadurch können die Statorbleche identisch geformt sein.

Besonders vorteilhaft ist es, wenn Öl als Kühlmedium vorgesehen ist, da dieses nicht zu Korrosion der Statorbleche führt. Beispielsweise kann als Kühlmedium Öl eines Getriebes verwendet werden, an welches die elektrische Maschine angeflanscht ist oder in welches die elektrische Maschine eingebaut ist. Abwärme der elektrischen Maschine und auch des Getriebes werden mit Hilfe des Schmieröls beispielsweise zu einem Wärmetauscher transportiert und dort an die Umgebung abgegeben. Auf diese Weise werden die elektrische Maschine und das Getriebe gekühlt. In diesem Fall ist ein kombinierter Kühl- und Schmierkreislauf und Öl als Kühlmedium und Schmiermittel vorgesehen. Das heißt, das Schmieröl fungiert nicht nur als Wärmeträger sondern auch als Schmiermittel. Das Öl erfüllt dann einen Mehrfachnutzen, in dem es das Getriebe schmiert und kühlt und weiterhin die elektrische Maschine kühlt. Dies ist zwar vorteilhaft, aber nicht zwingend. Denkbar ist auch, dass für Schmierung und Kühlung getrennte Kreisläufe vorgesehen sind. Auch in einem gesonderten Kühlkreislauf des Getriebes könnte jedoch Öl als Kühlmedium für die elektrische Maschine und das Getriebe vorgesehen sein.

Besonders vorteilhaft ist es auch, wenn die elektrische Maschine gehäuselos (das heißt ohne eigenes Gehäuse) in einem gemeinsamen Gehäuse für die elektrische Maschine und das Getriebe angeordnet ist. Mit anderen Worten grenzt das Statorblechpaket umfangsseitig direkt (und ohne ein das Statorblechpaket berührendes, umfangsseitig angeordnetes Motorgehäuse) an einen Innenraum des gemeinsamen Gehäuses des Getriebemotors. Auf diese Weise kann die elektrische Maschine und der Getriebemotor besonders einfach und leicht aufgebaut sein. An dieser Stelle wird angemerkt, dass die Begriffe "Motor", "Motorgehäuse" und "Getriebemotor" im Rahmen der Erfindung lediglich der einfacheren Bezeichnung wegen verwendet werden und eine Betriebsweise der elektrischen Maschine nicht auf den motorischen Betrieb einschränken. Selbstverständlich kann ein Motor und ein Getriebemotor auch generatorisch betrieben werden.

Erfindungsgemäß sind in den beiden Lagerschilden Leitungen oder Kanäle für ein Kühlmedium angeordnet, die mit den Kühlkanälen im Statorblechpaket hydraulisch verbunden sind. Dadurch wird in einem ersten Lagerschild ein Verteiler zu den Kühlkanälen im Statorblechpaket gebildet und in einem zweiten Lagerschild ein Sammler, um das Kühlmedium, das die Kühlkanäle im Statorblechpaket passiert hat, zu sammeln und in den Rücklauf des Kühlkreislaufs rückzuführen.

Von Vorteil ist es aber auch, wenn im ersten Lagerschild Leitungen oder Kanäle für ein Kühlmedium angeordnet sind, die mit den Kühlkanälen im Statorblechpaket hydraulisch verbunden sind und wenn die Kühlkanäle des Statorblechpakets im Bereich des zweiten Lagerschilds in eine Umgebung der elektrischen Maschine münden. Bei dieser Variante ist in einem ersten Lagerschild wiederum ein Verteiler zu den Kühlkanälen im Statorblechpaket vorgesehen. Im Rücklauf des Kühlkreislaufs ist jedoch kein Sammler vorgesehen, sondern das Kühlmedium, das die Kühlkanäle im Statorblechpaket passiert hat, wird direkt in eine Umgebung der elektrischen Maschine abgegeben, beispielsweise in das Innere eines Gehäuses eines Getriebemotors, in das die elektrische Maschine eingebaut ist. Der Kühlkreislauf kann auf diese Weise besonders einfach aufgebaut sein.

Günstig ist es schließlich, wenn die beiden Lagerschilde mit Hilfe von Zugankern mit dem Stator verbunden sind. Auf diese Weise wird ein unerwünschtes Auseinanderwandern der Statorbleche vermieden.

Die obigen Ausgestaltungen und Weiterbildungen der Erfindung lassen sich kombinieren, solange sie im Schutzbereich der Ansprüche bleiben.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine;
- Fig. 2: ein etwas detaillierter dargestelltes Statorblechpaket mit einem Kanal des Lagerschilds isoliert vom Rest der elektrischen Maschine in Schrägansicht;
- Fig. 3: einen vergrößerten Ausschnitt aus der Fig. 2 im oberen Bereich der dort dargestellten Anordnung;
- Fig. 4: einen Querschnitt durch ein Statorblech und
- Fig. 5: eine schematische Darstellung eines Fahrzeugs mit einer elektrischen Maschine der vorgeschlagenen Art.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

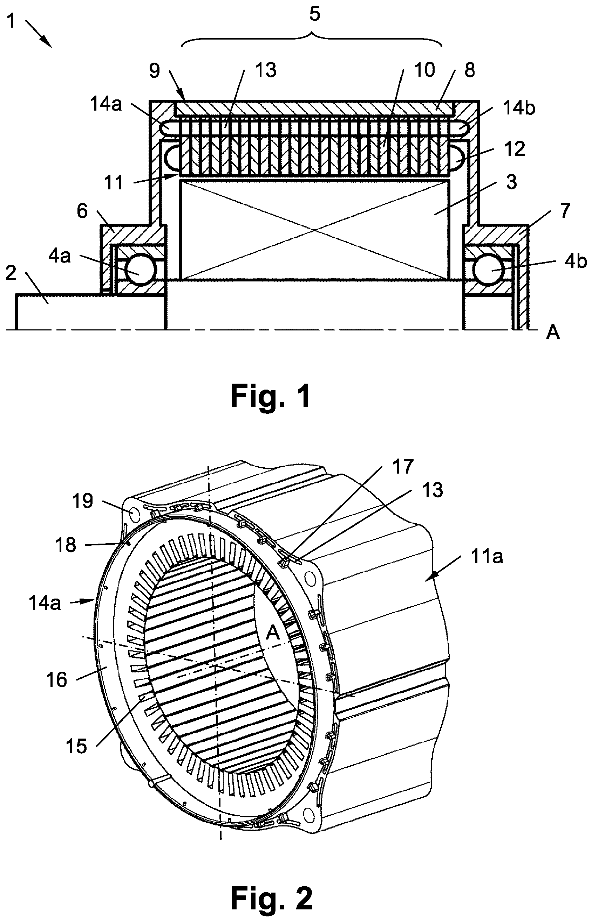

Fig. 1 zeigt einen Halbschnitt durch eine schematisch dargestellte elektrische Maschine 1. Die elektrische Maschine 1 umfasst, eine Rotorwelle 2 mit einem darauf sitzenden, hier nicht im Detail dargestellten, Rotor 3, wobei die Rotorwelle 2 mit Hilfe von (Wälz)lagern 4a, 4b um eine Drehachse A gegenüber einem Stator 5 drehbar gelagert ist. Konkret sitzt das erste Lager 4a in einem ersten Lagerschild 6 und das zweite Lager 4b in einem zweiten Lagerschild 7. Weiterhin umfasst die elektrische Maschine 1a ein (mittleres) Gehäuseteil 8, welches das erste Lagerschild 6 und das zweite Lagerschild 7 verbindet und den Stator 5 aufnimmt. Das erste Lagerschild 6, das zweite Lagerschild 7 und das Gehäuseteil 8 bilden in diesem Beispiel das Gehäuse 9 der elektrische Maschine 1a.

Der Stator 5 weist mehrere Statorbleche 10 auf, welche ein Statorblechpaket 11 beziehungsweise einen Stator-Grundkörper bilden, sowie im Statorblechpaket 11 angeordnete Statorwicklungen 12. Weiterhin umfasst der Stator 5 mehrere in Längsrichtung des Statorblechpakets 11 verlaufende Kühlkanäle 13. Weiterhin sind im ersten Lagerschild 6 und im zweiten Lagerschild 7 Leitungen oder Kanäle 14a, 14b angeordnet, die mit den Kühlkanälen 13 im Statorblechpaket 11 hydraulisch verbunden sind.

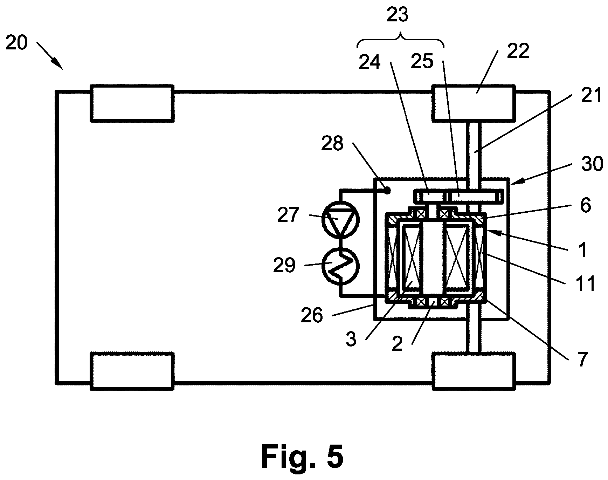

Die im Statorblechpaket 11 verlaufenden Kühlkanäle 13 sowie die Leitungen oder Kanäle 14a, 14b sind Teil eines in der Fig. 1 nicht zur Gänze dargestellten Kühlsystems der elektrischen Maschine 1. Das Kühlsystem kann insbesondere auch eine Pumpe für einen Wärmeträger sowie einen Wärmetauscher aufweisen (siehe hierzu auch Fig. 5). Als Wärmeträger kann beispielsweise eine im Kühlsystem zirkulierende Wasser-Glykol-Mischung oder Öl verwendet werden.

Fig. 2 zeigt nun ein etwas detaillierter dargestelltes Statorblechpaket 11a mit einem Kanal 14a isoliert vom Rest der elektrischen Maschine 1, in Schrägansicht.

Wie aus der Fig. 2 gut erkennbar ist, weist das Statorblechpaket 11a mehrere Statorwicklungs-Nuten 15 auf, welche die Statorwicklungen 12 aufnehmen. Sowohl die Statorwicklungs-Nuten 15 als auch die Kühlkanäle 13 verlaufen in dem gezeigten Beispiel in axialer Richtung, also parallel zur Drehachse A. Die Statorwicklungs-Nuten 15 und die Kühlkanäle 13 könnten aber auch schräg, das heißt schraubenlinienförmig, um die Drehachse A verlaufen.

Der Kanal 14a umfasst einen ringförmigen Abschnitt 16, mehrere Abzweiger 17, welche in die Kühlkanäle 13 im Statorblechpaket 11a münden, und mehrere auf die Statorwicklungen 12 gerichtete Sprühdüsen 18.

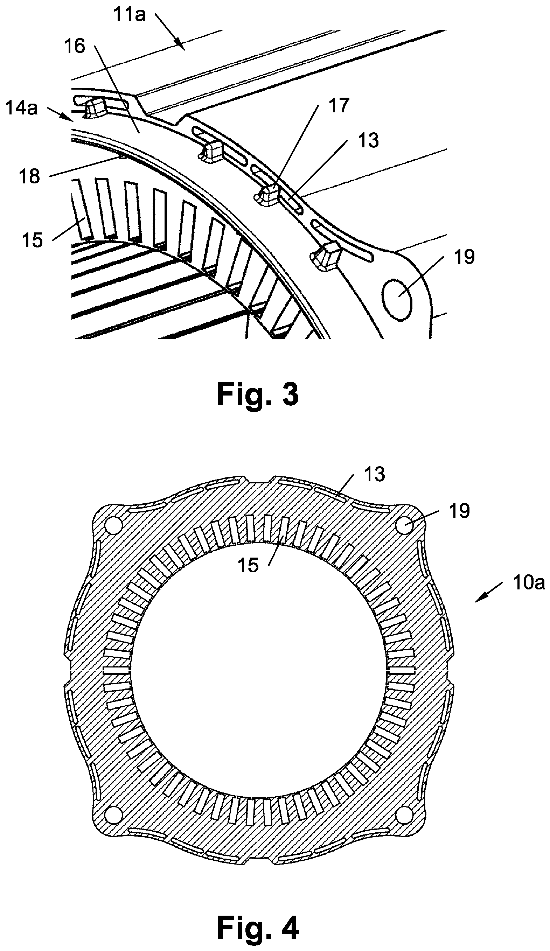

Zudem umfasst das Statorblechpaket 11a mehrere Ausnehmungen 19 für in der Fig. 3 nicht dargestellte Zuganker.

Die Kühlkanäle 13, die Statorwicklungs-Nuten 15 und die Ausnehmungen 19 können beispielsweise durch Stanzen oder Schneiden entsprechender Ausschnitte in den einzelnen Statorblechen 10a hergestellt sein. Werden die Statorbleche 10a übereinander gestapelt, so entstehen in Folge die Kühlkanäle 13, die Statorwicklungs-Nuten 15 und die Ausnehmungen 19. Werden die Statorbleche 10a beim Stapeln nicht verdreht, so entstehen axial verlaufende Kühlkanäle 13, Statorwicklungs-Nuten 15 und Ausnehmungen 19. Werden die Statorbleche 10a beim Stapeln etwas gegeneinander verdreht, so entsteht eine Schrägstellung der Kühlkanäle 13, der Statorwicklungs-Nuten 15 und der Ausnehmungen 19.

Ergänzend zeigt die Fig. 3 einen vergrößerten Ausschnitt aus der Fig. 2 im oberen Bereich der dort dargestellten Anordnung, und die Fig. 4 zeigt einen Querschnitt durch ein Statorblech 10a.

An dieser Stelle wird angemerkt, dass der Kanal 14a in den Fig. 2 und 3 der besseren Darstellbarkeit halber ohne das ihn begrenzende erste Lagerschild 6 gezeigt ist. Mit anderen Worten ist in den Fig. 2 und 3 nur der den Kanal 14a bildende Hohlraum im ersten Lagerschild 6 dargestellt. Denkbar wäre auch, dass für die Belange der Fig. 2 und 3 angenommen wird, dass das erste Lagerschild 6 aus einem vollständig durchsichtigen Material hergestellt ist. In der Realität besteht es jedoch üblicherweise aus einem Metall.

Die Fig. 5 zeigt schließlich die in ein Fahrzeug 20 eingebaute elektrische Maschine 1. Das Fahrzeug 20 weist wenigstens zwei Achsen auf, von denen wenigstens eine angetrieben ist. Der Antrieb des Fahrzeugs 20 erfolgt zumindest teilweise oder zeitweise durch die elektrische Maschine 1. Das heißt, die elektrische Maschine 1 kann zum alleinigen Antrieb des Fahrzeugs 20 dienen oder zum Beispiel im Verbund mit einer Verbrennungskraftmaschine vorgesehen sein (Hybridantrieb).

Konkret ist die elektrische Maschine 1 im gezeigten Beispiel über ein optionales Getriebe 23 mit den Halbachsen 21 der Hinterachse verbunden, an welche die angetriebenen Räder 22 montiert sind. Das Getriebe 23 weist in diesem Beispiel das Motorritzel 24 und das Getrieberad 25 auf. Dies hat aber lediglich illustrativen Charakter, und das Getriebe 23 kann auch komplexer aufgebaut sein. Grundsätzlich wäre auch denkbar, dass die Halbachsen 21 oder Räder 22 direkt, das heißt ohne Getriebe 23, angetrieben werden.

Die elektrische Maschine 1 und das Getriebe 23 sind hier in ein gemeinsames Gehäuse 26 eingebaut. Die elektrische Maschine 1 weist in diesem Fall auch kein gesondertes Motorgehäuse auf, das heißt das Statorblechpaket 11 grenzt umfangsseitig direkt (und ohne ein das Statorblechpaket berührendes, umfangsseitig angeordnetes Motorgehäuse) an einen Innenraum des gemeinsames Gehäuses 26, welches auch das Getriebe 23 aufnimmt. In der Fig. 5 ist auch eine Pumpe 27 dargestellt, welche mit Hilfe des Ansaugstutzens 28 Schmieröl aus dem gemeinsamen Gehäuse 26 ansaugt und über einen Wärmetauscher 29 einerseits zur elektrischen Maschine 1, andererseits aber auch zu Schmierstellen des Getriebes 23 pumpt.

Die an die Halbachsen 21 gekoppelte Anordnung bildet somit einen Getriebemotor 30, umfassend ein Getriebe 23 und eine an das Getriebe 23 gekoppelte elektrische Maschine 1, wobei ein Schmierkreislauf des Getriebes 23 mit den Kühlkanälen 13 der elektrischen Maschine 1 hydraulisch verbunden ist.

Abwärme der elektrischen Maschine 1 und auch des Getriebes 23 werden mit Hilfe des Schmieröls zum Wärmetauscher 28 transportiert und dort an die Umgebung abgegeben. Auf diese Weise werden die elektrische Maschine 1 und das Getriebe 23 gekühlt.

In der Fig. 5 ist ein kombinierter Kühl- und Schmierkreislauf und Öl als Kühlmedium und Schmiermittel vorgesehen. Das heißt, das Schmieröl fungiert nicht nur als Wärmeträger, sondern auch als Schmiermittel. Dies ist zwar vorteilhaft, aber nicht zwingend. Denkbar ist auch, dass für Schmierung und Kühlung getrennte Kreisläufe vorgesehen sind.

In den Fig. 1 bis 3 dargestellten Beispielen wird das Kühlmedium und/oder Schmiermittel, welches die Kühlkanäle 13 passiert hat, über den Kanal 14b im zweiten Lagerschild 7 gesammelt und dann in den Rücklauf des Kühl- und/oder Schmierkreislaufs rückgeführt. Denkbar wäre grundsätzlich aber auch, dass die Kühlkanäle 13 des Statorblechpakets 11, 11a im Bereich des zweiten Lagerschilds 7 in eine Umgebung der elektrischen Maschine 1, im gezeigten Beispiel in das gemeinsame Gehäuse 26, münden.

In den gezeigten Beispielen sind die Kühlkanäle 13 darüber hinaus nur an Stirnseiten des Statorblechpakets 11, 11a offen. Denkbar wäre jedoch auch, dass im Statorblechpaket 11, 11a radial nach außen führende Abführkanäle vorgesehen sind, die von den Kühlkanälen 13 ausgehen.

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können im Rahmen des Schutzbereichs der Ansprüche ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Elektrische Maschine (1), umfassend
- ein erstes Lagerschild (6) und ein zweites Lagerschild (7), in denen Kanäle (14a, 14b) für ein Kühlmedium angeordnet sind,
- einen zwischen den beiden Lagerschilden (6, 7) angeordneten Stator (5) mit einem Statorblechpaket (11, 11a) und darin angeordneten Statorwicklungen (12),
- einen im Stator (5) angeordneten Rotor (3) mit einer in den beiden Lagerschilden (6, 7) drehbar gelagerten Rotorwelle (2) und
- vollständig im Statorblechpaket (11, 11a) angeordnete und von diesem umrandete Kühlkanäle (13), welche an den axialen Stirnseiten des Statorblechpakets (11, 11a) offen sind,
wobei die Kanäle (14a, 14b) mit den Kühlkanälen (13) hydraulisch verbunden sind, **dadurch gekennzeichnet, dass**
einer der Kanäle (14a) einen ringförmigen Abschnitt (16), mehrere von dem ringförmigen Abschnitt (16) abgehende Abzweiger (17),
welche in die Kühlkanäle (13) münden, und mehrere von dem ringförmigen Abschnitt (16) abgehende und auf die Statorwicklungen (129) gerichtete Sprühdüsen (18) umfasst.

2. Elektrische Maschine (1) nach Anspruch 1, **dadurch gekennzeichnet, dass** die Kühlkanäle (13) nur an Stirnseiten des Statorblechpakets (11, 11a) offen sind.

3. Elektrische Maschine (1) nach Anspruch 1 oder 2, **dadurch gekennzeichnet, dass** die Kühlkanäle (13) des Statorblechpakets (11, 11a) im Bereich des zweiten Lagerschilds (7) in eine Umgebung der elektrischen Maschine (1) münden.

4. Elektrische Maschine (1) nach einem der Ansprüche 1 bis 3, **dadurch gekennzeichnet, dass** die Kühlkanäle (13) parallel zu einer Rotationsachse (A) der Rotorwelle (2) oder schraubenlinienförmig um die Rotationsachse (A) der Rotorwelle (2) verlaufen.

5. Elektrische Maschine (1) nach einem der Ansprüche 1 bis 4, **dadurch gekennzeichnet, dass** die beiden Lagerschilde (6, 7) mit Hilfe von Zugankern mit dem Stator (5) verbunden sind.

6. Getriebemotor (30), umfassend ein Getriebe (23) und eine an das Getriebe (23) gekoppelte elektrische Maschine (1) nach einem der Ansprüche 1 bis 5, **dadurch gekennzeichnet, dass** ein Kühl- und/oder Schmierkreislauf des Getriebes (23) mit den Kühlkanälen (13) der elektrischen Maschine (1) hydraulisch verbunden ist.

7. . Getriebemotor (30) nach Anspruch 6, **dadurch gekennzeichnet, dass** die elektrische Maschine (1) gehäuselos in einem gemeinsamen Gehäuse (26) für die elektrische Maschine (1) und das Getriebe (23) angeordnet ist.

8. . Getriebemotor (30) nach Anspruch 6 oder 7, **dadurch gekennzeichnet, dass** im Kühl- und/oder Schmierkreislauf des Getriebes (23) Öl als Kühlmedium und/oder Schmiermittel vorgesehen ist.

9. . Fahrzeug (20) mit wenigstens zwei Achsen, von denen wenigstens eine angetrieben ist, **dadurch gekennzeichnet dass** der besagte Antrieb zumindest teilweise oder zeitweise durch die elektrische Maschine (1) nach einem der Ansprüche 1 bis 5 oder durch einen Getriebemotor (30) nach einem der Ansprüche 6 bis 8 erfolgt.

## Claims

1. Electric machine (1), comprising:
- a first end shield (6) and a second end shield (7), in which channels (14a, 14b) for a cooling medium are arranged,
- a stator (5) arranged between the two end shields (6, 7) with a stator laminated core (11, 11a) and stator windings (12) arranged therein,
- a rotor (3) arranged in the stator (5) with a rotor shaft (2) rotatably mounted in the two end shields (6, 7), and
- cooling channels (13) arranged completely in the stator laminated core (11, 11a) and surrounded by the same, which are open at the axial end faces of the stator laminated core,
wherein the channels (14a, 14b) are hydraulically connected to the cooling channels (13),
**characterized in that**
one of the channels (14a) comprises an annular section (16), a plurality of branches (17) branching off from the annular section (16) which open into the cooling channels (13), and a plurality of spray nozzles (18) branching off from the annular section (16) and directed at the stator windings (12).

2. Electric machine (1) according to claim 1, **characterized in that** the cooling channels (13) are open only at end faces of the stator laminated core (11, 11a).

3. Electric machine (1) according to claim 1 or 2, **characterized in that** the cooling channels (13) of the stator laminated core (11, 11a) open into an environment of the electric machine (1) in the region of the second end shield (7).

4. Electric machine (1) according to any one of claims 1 to 3, **characterized in that** the cooling channels (13) run parallel to an axis of rotation (A) of the rotor shaft (2) or helically around the axis of rotation (A) of the rotor shaft (2).

5. Electric machine (1) according to any one of claims 1 to 4, **characterized in that** the two end shields (6, 7) are connected to the stator (5) by means of tie rods.

6. Geared motor (30), comprising a gear unit (23) and an electric machine (1) according to any one of claims 1 to 5 coupled to the gear unit (23), **characterized in that** a cooling and/or lubrication circuit of the gear unit (23) is hydraulically connected to the cooling channels (13) of the electric machine (1).

7. Geared motor (30) according to claim 6, **characterized in that** the electric machine (1) is arranged without a housing in a common housing (26) for the electric machine (1) and the gear unit (23).

8. Geared motor (30) according to claim 6 or 7, **characterized in that** oil is provided as a cooling medium and/or lubricant in the cooling and/or lubrication circuit of the gear unit (23).

9. Vehicle (20) with at least two axles, of which at least one is driven, **characterized in that** said drive is provided at least partially or temporarily by the electric machine (1) according to any one of claims 1 to 5 or by a geared motor (30) according to any one of claims 6 to 8.

## Revendications

1. Machine électrique (1), comprenant :
- un premier flasque (6) et un deuxième flasque (7), dans lesquels sont disposés des canaux (14a, 14b) pour un fluide de refroidissement,
- un stator (5) disposé entre les deux flasques (6, 7) avec un paquet de tôles statorique (11, 11a) et des enroulements statoriques (12) disposés dans celui-ci,
- un rotor (3) disposé dans le stator (5) avec un arbre de rotor (2) monté de manière rotative dans les deux flasques (6, 7), et
- des canaux de refroidissement (13) disposés entièrement dans le paquet de tôles statorique (11, 11a) et entourés par celui-ci, lesquels sont ouverts sur les faces frontales axiales du paquet de tôles statorique,
dans laquelle les canaux (14a, 14b) sont reliés hydrauliquement aux canaux de refroidissement (13),
**caractérisée en ce qu'**
un des canaux (14a) comprend un tronçon annulaire (16), plusieurs dérivations (17) partant du tronçon annulaire (16) qui débouchent dans les canaux de refroidissement (13), et plusieurs buses de pulvérisation (18) partant du tronçon annulaire (16) et dirigées vers les enroulements statoriques (12).

2. Machine électrique (1) selon la revendication 1, **caractérisée en ce que** les canaux de refroidissement (13) sont ouverts uniquement sur les faces frontales du paquet de tôles statorique (11, 11a).

3. Machine électrique (1) selon la revendication 1 ou 2, **caractérisée en ce que** les canaux de refroidissement (13) du paquet de tôles statorique (11, 11a) débouchent dans un environnement de la machine électrique (1) dans la zone du deuxième flasque (7).

4. Machine électrique (1) selon l'une quelconque des revendications 1 à 3, **caractérisée en ce que** les canaux de refroidissement (13) s'étendent parallèlement à un axe de rotation (A) de l'arbre de rotor (2) ou de manière hélicoïdale autour de l'axe de rotation (A) de l'arbre de rotor (2).

5. Machine électrique (1) selon l'une quelconque des revendications 1 à 4, **caractérisée en ce que** les deux flasques (6, 7) sont reliés au stator (5) au moyen de tirants.

6. Motoréducteur (30), comprenant une transmission (23) et une machine électrique (1) selon l'une quelconque des revendications 1 à 5 couplée à la transmission (23), **caractérisé en ce qu'** un circuit de refroidissement et/ou de lubrification de la transmission (23) est relié hydrauliquement aux canaux de refroidissement (13) de la machine électrique (1).

7. Motoréducteur (30) selon la revendication 6, **caractérisé en ce que** la machine électrique (1) est disposée sans carter dans un carter commun (26) pour la machine électrique (1) et la transmission (23).

8. Motoréducteur (30) selon la revendication 6 ou 7, **caractérisé en ce que** de l'huile est prévue comme fluide de refroidissement et/ou lubrifiant dans le circuit de refroidissement et/ou de lubrification de la transmission (23).

9. Véhicule (20) avec au moins deux essieux, dont au moins un est entraîné, **caractérisé en ce que** ledit entraînement s'effectue au moins partiellement ou temporairement par la machine électrique (1) selon l'une quelconque des revendications 1 à 5 ou par un motoréducteur (30) selon l'une quelconque des revendications 6 à 8.
